(19)

Europäisches
Patentamt
European
Patent Office
Office européen
des brevets

(11) **EP 2 652 006 B1**

(12) **EUROPEAN PATENT SPECIFICATION**

(45) Date of publication and mention
of the grant of the patent:
**16.03.2016 Bulletin 2016/11**

(21) Application number: **11797246.3**

(22) Date of filing: **15.12.2011**

(51) Int Cl.:
*C08K 9/08* *(2006.01)*　　　*C08L 67/06* *(2006.01)*
*C08J 5/24* *(2006.01)*　　　*C03C 25/10* *(2006.01)*
*C08J 5/04* *(2006.01)*　　　*C08G 63/91* *(2006.01)*
*C09J 167/06* *(2006.01)*　　*C08J 5/08* *(2006.01)*

(86) International application number:
**PCT/EP2011/072874**

(87) International publication number:
**WO 2012/080385 (21.06.2012 Gazette 2012/25)**

(54) **OIL IN WATER EMULSION**

ÖL-IN-WASSER EMULSION

ÉMULSION HUILE DANS EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2010 EP 10195382**

(43) Date of publication of application:
**23.10.2013 Bulletin 2013/43**

(73) Proprietor: **ACR III B.V.**
**1118 BJ Schiphol (NL)**

(72) Inventors:
• **BONATI, Nunzio**
**I-24040 Filago (IT)**
• **ZANOLIN, Massimo**
**I-24040 Filago (IT)**
• **JANSEN, Johan Franz Gradus Antonius**
**NL-6100 AA Echt (NL)**

(74) Representative: **De Clercq & Partners et al**
**Edgard Gevaertdreef 10a**
**9830 Sint-Martens-Latem (BE)**

(56) References cited:
**EP-A1- 2 149 637**　　**EP-A2- 0 181 839**
**DE-A1- 2 554 930**　　**US-A- 4 009 132**
**US-A- 6 080 807**　　　**US-A- 6 139 958**
**US-B1- 6 800 275**

**Description**

The present invention relates to an oil-in-water emulsion. Such an oil-in-water emulsion can for example be used as binder for chopped glass fibres. The present invention further relates to a fibre mat comprising fibres and a binder, and to the process for producing such a fibre mat. The present invention further relates to the use of such fibre mat for reinforcing a resin composition, in particular a thermosetting resin composition, to obtain fibre reinforced cured products which can for example be used in roofings (such as for example corrugated plates) and gel coatings.

Binders for fibres can be devided into 2 categories i.e. an emulsion type binders and powder type binders. In general, as powder type binders unsaturated polyesters have been used and as emulsion type binders polyvinylacetate binders have been used. In general the use of the polyester powdery binders usually has, compared to using polyvinylacetate emulsion type binder, several possible advantages: (i) having a higher solubility in the resin composition that is reinforced with the fibre mat which might result in better fibre reinforced cured products (ii) a higher translucency of the laminate obtained by reinforcing a resin with the fibre mat; and (iii) a higher hydrolytic stability of such laminate. However, the use of the polyvinylacetate emulsion type binder has, compared to the use of the polyester powdery binder, also several possible advantages namely (i) a more uniform fiber mat can be obtained because the distribution of the emulsion type binder on the mat is more uniform; and (ii) a better handability (such as the ability of folding the mat with less or even no gluing of the individual glass fibre mats to each other; such as demonstrated by the tackiness of the film obtained upon drying). As a consequence, none of the current binder systems fulfils all requirements and therefore there is still a need for binder compositions which combine the possible advantages of both systems. Although the powdery binders can be dispersed in water, the resulting dispersions are not stable, i.e. phase separation occurs upon storage.

The object of the present invention is to combine the possible advantages of both systems. Accordingly, the object of the invention is to combine the advantages of a high hydrolytic stability and a high translucency with the advantages of being able to prepare a uniform fiber mat that is easy to handle while properties like the binding performance of the binder (i.e. gluing of individual fibres) are not substantially sacrificed or even improved.

It has surprisingly been found that this object could be achieved by using an oil in water emulsion as binder of which the oil comprises an acid functional unsaturated polyester which acid functional polyester comprises unsaturated dicarboxylic acid units, diol units, units of an emulsifier with HLB value of from 9 to 20 and further comprising chain extender units.

Surprisingly, the oil-in-water emulsion according to the present invention can be uniformly applied on the fibres and is able to result in a high hydrolytic stability and high translucency of the laminate obtained by reinforcing a resin with the fibre mat. Furthermore, the oil-in-water emulsion according to the present invention is able to give a good binder performance. It has further surprisingly been found that, when the oil-in water emulsion according to the invention is applied compared to when a polyester powdery binder is applied, an even higher hydrolytic stability of the laminate obtained by reinforcing a resin with the fibre mat could be obtained. An additional advantage of the oil-in-water emulsion according to the present invention is that the emulsion can have a high solid content (i.e. a high amount of oil) which is advantageous since less water needs to be transported when transporting the emulsion, less water needs to be stored and/or less water needs to be removed during drying of the mat and thus the process for preparing the fibre mat can be more efficiently carried out.

As used herein, when referring to the acid functional unsaturated polyester it is meant the unsaturated polyester that has been chain extended and that comprises built-in emulsifier, which unsaturated polyester is acid functional.

The present invention further relates to the acid functional unsaturated polyester which is the effective compound of the oil-in-water binder emulsion of the present invention.

With the acid functional unsaturated polyester according to the invention the solid content (i.e. the amount of oil) of the oil-in-water emulsion can be high. A high solid content is advantageous for transport and/or storage since less water needs to be transported and/or stored. In particular, the oil in water emulsion can contain 30 wt.% of oil and more. Preferably the oil in water emulsion contains from 30 to 60 % by weight of oil. The amount of oil in the emulsion is preferably at least 35 wt. %, more preferably at least 40 wt.%. More preferably, the oil in water emulsion contains from 45 to 50 % by weight of oil. When using the oil-in-water emulsion according to the invention for gluing fibres to obtain a fibre mat or for coating fibres to obtain sized fibres, the oil-in-water emulsion is preferably diluted with water to such an extent that the amount of oil in the oil-in-water emulsion becomes 0.1-5 wt.%, since for application of the emulsion on the fibres, a low oil concentration is advantageous for obtaining a thin and uniformly distributed binder/sizing.

The acid functional unsaturated polyester comprises units of an emulsifier with HLB value of from 9 to 20, preferably from 9 to 19. The built-in emulsifier is preferably a nonionic emulsifier, more preferably a block copolymer, and even more preferably an ethylene oxide/propylene oxide block copolymer. The built-in emulsifier units preferably have an average molecular weight Mw from 3000 to 15000 Dalton, more preferably between 5000 and 15000 Dalton, even more preferably from 10000 to 15000 Dalton.

As used herein, the HLB (which stands for hydrophilic-lipophilic balance) value is determined according to the Griffin method by the following formula: $HLB = 20*(M_H/M)$, in which M is the molecular mass of the emulsifier and $M_H$

is the molecular mass of the hydrophilic portion. $M_H$ = (molecular mass of the hydrophilic fragments/(molecular mass of the hydrophilic and lipohilic fragments))*M; thus HLB=20*(molecular mass of the hydrophilic fragments/(molecular mass of the hydrophilic and lipohilic fragments)). The molecular mass of the hydrophilic fragments and the molecular mass of the hydrophilic and lipohilic fragments can be determined by determining the molar amount of protons from the hydrophilic fragments and the molar amount of protons from the lipophilic fragments which can be determined using $^1$H-NMR. In case the structure of the emulsifier is unknown, $^{13}$C-NMR and $^1$H-NMR can be used to elucidate the structure. The supplier of the emulsifier often characterizes the emulsifier by means of the HLB value determined according to the Griffin method (HLB = 20*($M_H$/M)).

As used herein the molecular weight is determined in tetrahydrofuran with Gel Permeation Chromatography according to ISO 13885-1 using polystyrene standards and appropriate columns designed for the determination of the molecular weights.

As used herein, chain extender units are units introduced into a polyester chain through addition reaction of the chain extender with the polyester terminal groups (hydroxyl and/or acid terminal groups) resulting in an increase of the molecular weight of the polyester. Preferably the chain extender units are capable of reacting with terminal carboxyl groups, such as for instance chain extenders with epoxide and/or oxazolidone groups. Bisepoxide units, more preferably bisphenol based epoxide units and even more preferably bisphenol A based epoxide units are used as chain extender units. Preferably, the chain extender units are bisepoxide units, more preferably bisphenol based bisepoxide units and even more preferably bisphenol A based epoxide units. Non-limiting examples of chain extenders which can be used in the present invention are bisphenol A diglycidyl ether, bisphenol F diglycidyl ether and Epicote 1001.

The average molecular weight Mw of the units of the acid functional unsaturated polyester other than the emulsifier and chain extender units is preferably from 2000 to 10000 Dalton. Preferably, the average molecular weight Mw of the units of the acid functional unsaturated polyester other than the chain extender units is from 3000 to 15000 Dalton, more preferably from 5000 to 10000 Dalton.

It has been found that the acid functional unsaturated polyester (chain extended unsaturated polyester with built in emulsifier) preferably has a glass transition temperature $T_g$ from -5 to 40 °C, more preferably from 0 to 30 °C and even more preferably from 0 to 15 °C, as determined with DSC according to ASTM E1356. When using an acid functional unsaturated polyester with a $T_g$ lower than -5 °C, the tackiness of the binder may be too high as shown in for example an increase of the adhering of the fibre mats to each other when folding the mat. When using an acid functional unsaturated polyester with a $T_g$ higher than 40 °C, the tackiness of the binder may be too low as shown in for example brittleness of the fibre mat.

The acid functional unsaturated polyester (chain extended unsaturated polyester with built in emulsifier) preferably has a viscosity of from 20 to 60 dPa.s (at 125 °C). When using an acid functional unsaturated polyester with a viscosity higher than 60 dPa.s, it may become difficult to emulsify the resin via the addition of water. When using an acid functional unsaturated polyester with a viscosity lower than 20 dPa.s, the stickiness of the binder after application on the fibers may become too high. As used herein, the viscosity of the acid functional unsaturated polyester is determined according to ASTM D4287 (measured with cone plate at 125°C).

The acid functional unsaturated polyester (chain extended unsaturated polyester with built in emulsifier) has an acid value of at least 0.1. Preferably, the acid functional unsaturated polyester has an acid value from 0.1 to 20 mg KOH/g polyester, more preferably from 10 to 20. When using an acid functional unsaturated polyester with an acid value of at least 0.1 and at most 20, applying the emulsion on the fibres can be easily performed and a laminate with a good hydrolytical resistance can be obtained. As used herein, the acid value of the polyester is determined titrimetrically according to ISO 2114-2000.

In one embodiment of the invention, the acid functional unsaturated polyester is prepared by (1) polycondensation of an unsaturated dicarboxylic acid and/or anhydride thereof, a diol and an emulsifier with HLB value from 9 to 20 and (2) chain extending the polyester obtained in step (1). In another embodiment, the acid functional unsaturated polyester has been obtained by (1) polycondensation of a diol and an unsaturated dicarboxylic acid and/or anhydride thereof, (2) reacting the polyester obtained in step 1 with an emulsifier with HLB value from 9 to 20 and (3) chain extending the polyester obtained in step (2).

The unsaturated polyester obtained before the chain extension (i.e. in step (1) or (2)) is also acid functional. The acid value of the unsaturated polyester obtained before the chain extension (i.e. in step (1) or (2)) preferably is from 20 to 50 mg KOH/g polyester, more preferably from 20 to 40 mg KOH/g polyester.

The unsaturated dicarboxylic acid units of the acid functional unsaturated polyester are preferably selected from fumarate units or itaconate units or mixtures thereof. More preferably, the unsaturated dicarboxylic acid units are fumarate units, built-in by using fumaric acid and/or via isomerisation of maleates. The unsaturated dicarboxylic acids used for preparing the acid functional unsaturated polyester are preferably selected from maleic anhydride, fumaric acid, itaconic acid and mixtures thereof. More preferably, maleic anhydride and/or fumaric acid are/is used as unsaturated dicarboxylic acids.

The acid functional unsaturated polyester preferably further comprises other diacid units than unsaturated dicarboxylic acid units, preferably saturated dicarboxylic acids in view of viscosity control of the polyester resin. The other diacid units are preferably selected from phthalate, succinate and/or adipate units.

Even more preferably, the acid functional unsaturated polyester comprises cyclic dicarboxylic acids or anhydride units like for instance phthalate units since this may result in an increase of the $T_g$ of the acid functional unsaturated polyester. The ratio of the molar amount of unsaturated dicarboxylic acid units to the molar amount of other diacid units is preferably from 0.2 to 1.

The diol units of the acid functional unsaturated polyester are preferably aliphatic diol units, which are preferably selected from dipropyleneglycol, propoxylated bisphenol-A and/or neopentyl glycol, and more preferably, in view of Tg and flexibility of the resin, selected from dipropyleneglycol and/or propoxylated bisphenol-A and mixtures thereof.

The acid functional unsaturated polyester preferably further comprises triol units, preferably selected from trimethylolpropane and/or glycerol. More preferably trimethylolpropane is used as triol unit for being able to increase the viscosity of the acid functional unsaturated polyester.

The amount of unsaturated dicarboxylic acids and anhydrides used to prepare the acid functional unsaturated polyester is preferably from 4 to 50 wt.% (relative to the total amount of acid functional unsaturated polyester). In a preferred embodiment of the invention, saturated dicarboxylic acids or anhydrides are also used to prepare the acid functional unsaturated polyester. In case saturated dicarboxylic acids or anhydrides are used to prepare the acid functional unsaturated polyester, the amount of saturated dicarboxylic acids and anhydrides is preferably from 20 to 40 wt.% and the amount of unsaturated dicarboxylic acids and anhydrides used to prepare the acid functional unsaturated polyester is then preferably from 4 to 10 wt.% (relative to the total amount of acid functional unsaturated polyester). The amount of diols used to prepare the acid functional unsaturated polyester is preferably from 30 to 75 wt.% (relative to the total amount of acid functional unsaturated polyester). In case propoxylated bisphenol A is used to prepare the acid functional unsaturated polyester, the amount of propoxylated bisphenol A is preferably from 20 to 40 wt.% (relative to the total amount of acid functional unsaturated polyester). In case a triol is used to prepare the acid functional unsaturated polyester, the amount of triols is preferably from 1 to 5 wt.% (relative to the total amount of acid functional unsaturated polyester). The amount of built in emulsifier used to prepare the acid functional unsaturated polyester is preferably from 5 to 15wt.% (relative to the total amount of acid functional unsaturated polyester). The amount of chain extender used to prepare the acid functional unsaturated polyester is preferably from 2 to 10wt.% (relative to the total amount of acid functional unsaturated polyester).

The oil of the emulsion may, next to the acid functional unsaturated polyester, further comprise additional emulsifier (further referred to as external emulsifier), plasticizer and other additives like for example an associative thickener. These additives are preferably added to the acid functional unsaturated polyester prior to emulsifying the acid functional unsaturated polyester but can also be added to the oil in water emulsion after the emulsification. The presence of an associative thickener is preferred as this may reduce the tendency of the acid functional unsaturated polyester to migrate from the mat.

The amount of the acid functional unsaturated polyester in the oil is preferably from 50 to 100 wt.%, more preferably from 70 to 100 wt.%.

The particle size distribution of the emulsion is preferably from 100 to 3000 nm in view of the high stability of the emulsion within this range and low tendency of the acid functional unsaturated polyester to migrate from the mat. More preferably, the particle size distribution of the oil is from 500 to 2000 nm and even more preferably from 900 to 1000 nm. The particle size distribution is measured using light scattering (dynamic) method according to ISO13320-1. The oil in water emulsion preferably has a multimodal particle size distribution since this contributes in obtaining an emulsion with a low viscosity.

The oil in water emulsion is preferably prepared by catastrophic phase inversion, i.e. by adding water to the acid functional unsaturated polyester composition, as this is a preferred method for obtaining emulsions with relative high oil content.

The present invention further relates to the use of the oil in water emulsion according to the invention for gluing fibres to obtain a fibre mat. Such a fibre mat may advantageously be used for reinforcing a resin to obtain a composite product. Such a fibre mat is for example produced by applying the oil in water emulsion according to the invention to at least one layer of fibres, drying the mat preferably by heating, and folding the mat preferably in rolls. The heating is preferably performed in an oven. Applying the oil in water emulsion according to the invention to the layer of fibres is preferably done by spraying or by passing the layer of fibres through a bath containing the emulsion. The present invention therefore further relates to a process for producing a fibre mat by applying the oil in water emulsion according to the invention to at least one layer of fibres, drying the mat, and folding the mat preferably in rolls.

The present invention also relates to a fibre mat comprising fibres and a binder comprising the acid functional unsaturated polyester according to the invention. In a preferred embodiment, the fibre mat is a glass chopped strand fibre mat.

The present invention further relates to the use of the oil-in-water emulsion according to the invention for coating fibres to obtain sized fibres.

In a preferred embodiment of the invention, the oil-in-water emulsion is, prior to application of the emulsion for gluing fibres to obtain a fibre mat or for coating fibres to obtain sized fibres, diluted with water to such an extent that the amount of oil in the oil-in-water emulsion becomes 0.1-5 wt.%

The fibers included organic fibres, such as for example polyamide fibre, aramid fibre, polyethylene fibre and polyester fibre; inorganic fibres such as for example glass fibres and carbon fibres; and natural fibres. The fibres are preferably chopped fibres. The fibres are preferably sized fibres.

In a preferred embodiment of the invention, the fibres are fibres which are preferably sized. In a more preferred embodiment of the invention, the fibres are chopped glass fibres which are preferably sized.

The fibre mat according to the invention may be used for reinforcing a matrix of a thermosetting synthetic resin, such as for example an epoxy resin, unsaturated polyester resin, a vinyl ester resin, phenolic resin, or a matrix of a thermoplastic polymer, such as for example a polyamide, a polyolefin, a polycarbonate or a polyester. In a particular embodiment, the fibre mat is used in a matrix of a thermosetting synthetic resin, preferably in a matrix of an unsaturated polyester resin or a vinyl ester resin or a mixture thereof.

The present invention therefore further relates in particular to a composition comprising a thermosetting resin, preferably an unsaturated polyester resin or a vinyl ester resin (a (meth)acrylate functional resin), a fibre mat according to the invention and a curing initiator, such as a photoinitiator, a thermal initiator or a redox initiator. The present invention further relates to cured products obtained by curing a composition comprising a resin, a fibre mat according to the invention and a curing initiator.

The present invention further relates to the use of the cured product in the field of chemical anchoring, roofing, relining, gelcoats, containers, tanks, pipes, automotive parts, flooring, windmill blades, aviation, off shore applications and marine. The fibre mat according to the invention can advantageously be used in particular for roofing, marine applications such as gel coatings, relining and/or construction of tanks & pipes in view of the excellent hydrolytic resistance of the fibre mat. Further, the fibre mat according to the invention can advantageously be used in particular for preparing transparent cured products such as corrugated plates that can be used as roofings in view of the increased transparency in case a fibre mat according to the invention is applied as reinforcement

The present invention is now further illustrated but in no way limited by reference to the following examples. Unless otherwise specified all parts, percentages and ratios are on a weight basis.

Analytical techniques

The stability of the oil in water emulsion during storage was determined as follows:

(a) Prepare about 250 gram of oil in water emulsion (10-11%) and dilute the emulsion to test, with bi-distilled water;
(b) Check the solid residue (weight in g);
(c) Pour the diluted water emulsion in a graduate cylinder (capacity 250 ml with diameter about 38 mm);
(d) After 24 hours take out the upper 2/3 of emulsion from the cylinder with a syringe and without stirring;
(e) Mix the amount taken and determine the solid residue;
(f) % of stability is the ratio from the solid measured in (e) with the solid measured in (b);
(g) Check the bottom of the cylinder if there are dregs.

The glass transition temperature was determined with DSC according to ASTM E1356 (heating rate = 10°C/min from -30 to 130 °C).

The particle size distribution PSD was measured using light scattering (dynamic) method according to ISO13320-1.

The viscosity of the polyester was determined according to ASTM D4287 (measured with cone plate at 125°C).

The viscosity of the emulsion was determined according to ISO 2555 (measured at 23°C).

The acid value of the polyester was determined titrimetrically according to ISO 2114-2000.

Determination of HLB value

$^1$H-NMR spectra of the ethylene oxide(EO)/propylene oxide(PO) emulsifier Pluronic F108 was recorded on a Bruker Avance III 400MHz NMR using 32 scans with a waiting time between scans of 5 seconds. The molar ratio of the ethylene oxide fragments relative to the ethylene oxide and propylene oxide fragments was determined based on the integration of the signals.

For clarity, the results of the $^1$H-NMR analysis of Pluronic F108 is shown below.

The integration of the region 3.25-3.9 ppm (A which is 456) yields the relative molar amount of protons from $CH_2$ and CH of both the EO part (O-CH2-CH2-) and PO part (O-CH-CH2-). The integration of the region around 1.15 ppm (B which is 50) yields the relative amount of protons from $CH_3$ of the PO part (O-C(CH3)-C-).

Now the HLB can be calculated according to the following formula:

$$HLB = 20 * \frac{M_H}{M} = 20 * \frac{\left(\dfrac{\left(\dfrac{(A-B)}{n_{EO}} * M_{EO}\right)}{\left(\dfrac{(A-B)}{n_{EO}} * M_{EO} + \dfrac{B}{n_{PO}} * M_{PO}\right)}\right) * M}{M}$$

$$= 20 * \frac{\left(\dfrac{(A-B)}{n_{EO}} * M_{EO}\right)}{\left(\dfrac{(A-B)}{n_{EO}} * M_{EO} + \dfrac{B}{n_{PO}} * M_{PO}\right)}$$

in which A =integral region 3.25-3.9 ppm, B=integral region 1.15 ppm, $n_{EO}$=amount EO hydrogens in that integration region (4), $M_{EO}$= molecular mass EO fragment (44), $n_{PO}$= amount PO hydrogens in that integration region (3), $M_{PO}$= molecular mass PO fragment (58) and M molecular mass of the polymer (which falls out the equation), resulting in

$$HLB = 20 * \frac{\left(\dfrac{(456-50)}{4} * 44\right)}{\left(\dfrac{(456-50)}{4} * 44 + \dfrac{50}{3} * 58\right)} = 16.4$$

Preparation of oil in water emulsion

Materials used

Atlas G16 = Bisphenol-A- 3-propoxylate from CRODA
MZA = Maleic anhydride from LONZA
1-Methoxy-2- proponal obtained from BASF
Phthalic anhydride from LONZA
EPILOX A 19-00 = Epoxy resin with epoxy equivalent weight EEW of 190 from LEUNA HARZE GmbH
Pluronic PE10100 = Block copolymer of ethylene oxide and propylene oxide (molecular mass 3500 Dalton) from BASF with HLB value as given by BASF of 1.4
Pluronic PE10300 = Block copolymer of ethylene oxide and propylene oxide from BASF with HLB value as given by BASF of 6.8
Pluronic PE10500 = Block copolymer of ethylene oxide and propylene oxide (molecular mass 6000 Dalton) from BASF with HLB value as given by BASF of 10 Pluronic F108 = Block copolymer of ethylene oxide and propylene oxide (molecular mass 14000 Dalton) from BASF with HLB value as given by BASF of 16

An unsaturated polyester was prepared based on the ingredients (amounts are in g) in the tables (step A) under azeotropic conditions using toluene as solvent to obtain unsaturated polyester A.
In step B (optional) the unsaturated polyester prepared in step A was modified by the incorporation of an emulsifier (polyester block copolymer) via a simple condensation reaction resulting in unsaturated polyester B containing an internal emulsifier. In the subsequent step C the product of step B (or of step A in case step B was not carried out) was chain extended by adding a chain extender to the reaction mixture and letting the chain extension reaction proceed at 180°C for 2 hrs resulting in an acid functional unsaturated polyester containing an internal emulsifier and being chain extended.
Optionally in step D an external emulsifier was added to the reaction mixture.
The reaction mixture was transferred to a 10 liter emulsification reactor. A cosolvent (methoxypropanol) was optionally added.

Water and optionally a cosolvent (methoxypropanol) was slowly added to the to the reaction mixture at 70-80°C at high stirring speed (cowls 1000 rpm; anchor 20 rpm). Initially this resulted in a water in oil emulsion which via a phase inversion transformed into an oil in water emulsion.

Preparation of a film of the emulsion

Of the emulsion a film was prepared by depositing a layer of emulsion on a glass plate to obtain a layer with a uniform thickness of 1 mm. Dried for 30' at room temperature, then the plate with the layer has been placed (in horizontal position) in an oven and dried at 130°C for 1 hour. Thereafter, the plate was removed from the oven and put in a horizontal position until completely cooled. The evaluation took under consideration: (1) appearance (2) consistency and (3) tackiness.

Example 1 and comparative experiments A-B

Table 1

| | | | Exp 1 | Comp A | Comp B |
|---|---|---|---|---|---|
| A | Atlas G16 | | 290.92 | 290.92 | 310.15 |
| | Dipropylene glycol | | 228.05 | 228.05 | 288.44 |
| | Trimethylolpropane | | 28.28 | 28.28 | |
| | Phtalic anhydride | | 308.44 | 308.44 | |
| | MZA | | 70.64 | 70.64 | 296.4 |
| | | | | | |
| B | Pluronic PE 10500 (HLB=10) | | | | 83.33 |
| | Pluronic F108 (HLB=16) | | 86.76 | 86.76 | |
| | | | | | |
| C | EPILOX A 19-00 | | 35.43 | | |
| | Methoxypropanol | | | | 75 |
| | | | | | |
| | Acid Value (AV) (mg KOH/g) | | 17.7 | 28 | 14.4 |
| | $T_g$(°C) | | 12.3 | 5 | 0.004 |
| | Viscosity (dPa.s) | | 36 | 16 | 33.6 |
| | | | | | |
| D | Emulsion | | | No inversion; completely settled | |
| | Viscosity (mPa.s) | | 195 | | 450 |
| | Solid% | | 48.8 | | 49.06 |
| | Acid Value (AV) (mg KOH/g) | | 8.36 | | 8.78 |
| | Stability (%) | | 98 | | 99.2 |
| | PSD | | 889 | | 479 |
| | | | | | |

(continued)

| | | Exp 1 | Comp A | Comp B |
|---|---|---|---|---|
| | | Transparent, slightly elastic, tacky free film | Transparent, slightly elastic, tacky | Transparent, slightly elastic, tacky |

This table clearly demonstrates that chain extension with a chain extender is required for obtaining a tacky free film. In case chain extension is omitted (comp A vs example 1) the viscosity of the polyester is too low and it is difficult to emulsify, i.e. in comp A the emulsification failed. Furthermore the film is tacky and not suitable for being applied as binder for fibre mat.

In Comp B, by changing the formulation, it was possible to increase the viscosity of the polyester without the epoxy extension, and as such emulsify the polyester but the Tg of the polyester is low and the film tacky rendering the emulsion unsuitable for use as a binder composition since the glass fibre mats will become glued to each other when the resulting mat is folded.

Example 2 and Comparative Experiments C-E

Table 2

| | | | Ex 2 | Comp C | Comp D | Comp E |
|---|---|---|---|---|---|---|
| A | Atlas G16 | | 280.54 | 270.33 | 276.61 | 289.18 |
| | Dipropylene glycol | | 219.91 | 211.91 | 216.83 | 226.69 |
| | Trimethylolpropane | | 27.27 | 26.28 | 26.89 | 28.11 |
| | Phtalic anhydride | | 297.43 | 286.61 | 293.27 | 306.60 |
| | MZA | | 68.12 | 65.64 | 67.17 | 70.22 |
| | | HLB-value | | | | |
| B | Reacted Pluronic F108 | 16 | 115.35 | | | |
| | % emulsifier | | 12 | | | |
| | | | | | | |
| C | EPILOXA 19-00 | | 38.15 | 35.14 | 35.96 | 37.59 |
| | | | | | | |
| | External Pluronic F108 | HLB 16 | | 150.17 | 130.43 | 90.91 |
| | % emulsifier | | | 17.67 | 15 | 10 |
| | | | | | | |
| D | Emulsion | | | | | |
| | Viscosity (mPa.s) | | 1420 | 5600 | 1500 | 560 |
| | Solid% | | 48.6 | 54 | 48 | 48.3 |
| | AV (mg KOH/g) | | 6.99 | 7.36 | 6.07 | 7.65 |
| | Stability (%) | | 100 | 99.7 | 96.7 | 93.8 |

(continued)

| | | | Ex 2 | Comp C | Comp D | Comp E |
|---|---|---|---|---|---|---|
| | PSD | | 607 | 415 | 401 | 1992 |
| | $T_g$(°C) | | 9.44 | 3.27 | 6.78 | 12.10 |
| | | | | | | |
| | | | Transparent, sligtly elastic, tacky free | Transparent; sligtly elastic; tacky. | Transparent; sligtly elastic; tacky. | Transparent; sligtly elastic; tacky. |

This table clearly demonstrates that reacted (internal) emulsifier is required in order to obtain a stable oil in water emulsion and tacky free film. In case of external emulsifier, higher amount of emulsifier is needed to have particle size distribution below 1000 nm and high stability of the emulsion; but it leads to lower Tg and higher tackiness that is negative for the preparation of glass fibre mat.

Examples 3-4 and Comparative Experiments F-G

Table 3

| | | | Ex 3 | Ex 4 | Comp F | Comp G |
|---|---|---|---|---|---|---|
| A | Atlas G16 | | 264.96 | 241.05 | 241.05 | 241.05 |
| | Dipropylene glycol | | 246.42 | | | |
| | Diethylene Glycol | | | 221.77 | 221.77 | 221.77 |
| | Phtalic anhydride | | 280.90 | 319.46 | 319.46 | 319.46 |
| | MZA | | 64.34 | 73.15 | 73.15 | 73.15 |
| | | HLB-value | | | | |
| B | Reacted Pluronic F108 | 16 | 80.30 | | | |
| | Reacted Pluronic PE 10500 | 10 | | 79.98 | | |
| | Reacted Pluronic PE 10300 | 6.8 | | | 79.98 | |
| | Reacted Pluronic PE10100 | 1.4 | | | | 79.98 |
| | | | | | | |
| C | EPILOX A 19-00 | | 32.26 | 36.69 | 36.69 | 36.69 |
| | | | | | | |
| D | Emulsion | | | | | No inversion; completely settled |
| | Stability (%) | | 99.60 | 99.50 | 80.00 | |
| | PSD | | 260 | 500 | 2500 | |
| | $T_g$ (°C) | | 7.00 | 8.00 | 8.00 | |

This table clearly demonstrates that reacted (internal) emulsifier with HLB value as claimed is required in order to obtain a stable oil in water emulsion. In comp G there was no inversion at all and in comp F the stability of the emulsion was low as shown by the stability measured and the high particle size distribution.

Preparation of a chopped strand glass fiber mat

65g chopped glass fiber was uniformly and randomly distributed on a metal grid having a size of 34 cm x 38 cm. A top grid was placed on it and blocked with clips. The grids and the glass fibers were immersed in a vessel that contained the emulsion of examples 1 and 2 and comparative experiments C-E, having a polyester concentration of 2% by weight. After 1 min the grids with glass fibers was taken out of the emulsion and drained for 1 min to remove excess of water. The grids were placed for 5 min in a ventilated oven maintained at 150°C, then the grid was rotated by 180° and maintained for others 5 min. Finally the grid was taken from the oven, rotated for 180°, the over side of wire was taken off, and the grid was put in oven for another 5 min, the time needed to dry completely depends on the ventilation of the oven. Then the grid was taken out the oven and the mat was removed.

Using the emulsion prepared in comparative experiments C-E (Table 2) the mats were, after drying, sticky and upon removal of the grids all fibres tended to glue together resulting in a very in-homogenously distributed mat. Furthermore these mats could not be stapled as the individual mats were then glued together.

Using the emulsion prepared in examples 1-2, the mats were, after drying, not sticky and a very homogenously distributed mat was obtained. Furthermore the individual mats do not glue together when the mats are stapled.

Preparation of laminates

A 2-ply laminate was prepared with the glass fiber mat prepared above with the emulsion of example 1 by using the hand-lay up technique at 23 °C. Synolite 8388-I-2 resin was used which was cured with 1.5% of Butanox M50. The ratio of glass fibre amount to resin amount is 30/70. The laminate was maintained for 45 minutes at room temperature, then the laminate was postcured by placing the laminate in an oven set at 80 °C for 30 minutes.

As comparison, laminates were also prepared using commercially available glass fiber mats with polyvinyl acetate emulsion binder (450 g/m$^2$) and with a solid unsaturated polyester binder (450 g/m$^2$).

The cured laminates were visually inspected with respect to transparency and presence of visual strands. The results are given in Table 4.

Table 4

|  | Laminate with glass fibre mat using emulsion of ex 1 | Comp PVAC | Comp solid UP |
| --- | --- | --- | --- |
| Visibility of fibres | No glass fibers visible | Many glass fibers visible | No glass fibers visible |
| Overall transparency | Transparent | Opaque | Transparent |

Table 4 shows that the laminates according to the invention possess improved transparency and less fibres are visible compared with the laminates prepared with glass fibre mats prepared with polyvinyl acetate emulsion binder. The transparency and fibre visibility of laminates prepared with glass fibre mats prepared with the binder according to the invention is on the same good level as for laminates prepared with glass fibre mats prepared with unsaturated polyester powdery binder, but the handability and uniformity of distribution of the polyvinylacetate emulsion binder is maintained.

Laminates were prepared as above but using ATLAC 580 ACT as resin and maintaining the laminate for 24 hours at room temperature and postcuring the laminates by placing the laminate in an oven set at 40 °C for 16 hours. These laminates were subjected to the so-called blistering test in order to asses the hydrolytic resistance.

For this test a 500 μm thick white gel coat (tradename Neogel 8373-W-1) was applied on the laminate prepared above.

The laminates were subjected to a QCT (Q-Lab Condensation Tester) test (65°C) according to ASTM D4585 for 33 and 126 days.

The results are given in Table 5. In the Table, the size refers to the dimension of the blister; a high value of the number corresponds with a very small blister. Also an indication of the amount of blisters is given: few means very low amounts while dense means very large amounts.

Table 5

|  | Laminate with glass fibre mat using emulsion of ex 1 | Comp PVAC | Comp solid UP |
| --- | --- | --- | --- |
| QCT after 33 days | No blister present | Few blister-size 4 | Medium/Dense blister-size 4 |
| QCT after 126 days | Few blister present size 8 | Few blister-size 4 | Dense blister-size 2 |

In the example according to the invention hardly any blisters were visible after 126 days, whereas in the commercial reference systems blisters of a larger size and/or higher amounts of blisters are observed.

This clearly demonstrates the versatility of the binders according to the invention as they result in bound glass fibre mats clearly showing a better dispersivity of the fibers in an UP resin and a better hydrolytic resistance.

**Claims**

1. Oil-in-water emulsion, wherein the oil comprises an acid functional unsaturated polyester which acid functional unsaturated polyester comprises unsaturated dicarboxylic acid units, diol units, units of an emulsifier with HLB value of from 9 to 20 and further comprising chain extender units, whereby the HLB is determined according to the formula $20*(M_H/M)$, in which M is the molecular mass of the emulsifier and $M_H$ is the molecular mass of the hydrophilic portion of the emulsifier.

2. Oil-in-water emulsion according to claim 1, wherein the acid functional unsaturated polyester comprises units of an emulsifier with HLB value of from 9 to 19.

3. Oil-in-water emulsion according to claim 1 or 2, wherein the built-in emulsifier is an ethylene oxide/propylene oxide block copolymer.

4. Oil-in-water emulsion according to anyone of the above claims, wherein the chain extender units are bisphenol based bisepoxide units.

5. Oil-in-water emulsion according to anyone of the above claims, wherein the acid functional unsaturated polyester has a $T_g$ from -5 to 40°C, preferably from 0 to 30°C, more preferably from 0 to 15°C, whereby the $T_g$ is determined with DSC according to ASTM E1356.

6. Oil-in-water emulsion according to anyone of the above claims, wherein the acid functional unsaturated polyester has a viscosity of from 20 to 60 dPa.s, whereby the viscosity is determined according to ASTM D4287 (measured with cone plate at 125°C).

7. Oil-in-water emulsion according to anyone of the above claims, wherein the acid functional unsaturated polyester has an acid value from 0.1 to 20, preferably from 10 to 20, whereby the acid value polyester is determined titrimetrically according to ISO 2114-2000.

8. Oil-in-water emulsion according to anyone of the above claims, wherein the unsaturated dicarboxylic acid units are fumarate units.

9. Oil-in-water emulsion according to anyone of the above claims, wherein the acid functional unsaturated polyester further comprises phthalate units.

10. Oil-in-water emulsion according to anyone of the above claims, wherein the ratio of the molar amount of unsaturated dicarboxylic acid units to the molar amount of other diacid units is 0.2 to 1.

11. Oil-in-water emulsion according to anyone of the above claims, wherein the diol units of the acid functional unsaturated polyester are aliphatic diol units, preferably selected from dipropyleneglycol and/or propoxylated bisphenol-A.

12. Oil-in-water emulsion according to anyone of the above claims, wherein the acid functional unsaturated polyester further comprises triol units, preferably trimethylolpropane units.

13. Oil-in-water emulsion according to anyone of the above claims, wherein the emulsion contains at least 30 wt.% of oil.

14. Oil-in water emulsion according to anyone of the above claims, wherein the emulsion contains from 45 to 50 % by weight of oil.

15. Oil-in-water emulsion according to anyone of the above claims, wherein the amount of the unsaturated polyester in the oil is from 70 to 100 wt.%.

**16.** Oil-in-water emulsion according to anyone of the above claims, wherein the particle size distribution of the emulsion is from 100 to 3000 nm, preferably from 500 to 2000 nm, more preferably from 900 to 1000 nm, whereby the particle size distribution is measured using light scattering dynamic method according to ISO13320-1.

**17.** Oil in water emulsion according to anyone of the above claims, wherein the emulsion has been prepared by catastrophic phase inversion.

**18.** Use of the oil in water emulsion according to anyone of the above claims for gluing fibres to obtain a fibre mat.

**19.** Use of an oil in water emulsion for gluing fibres to obtain a fibre mat, wherein the oil comprises an acid functional unsaturated polyester according to anyone of claims 1-12 and the emulsion contains from 0.1 to 5 wt.% of oil.

**20.** Fibre mat comprising fibres and a binder comprising the acid functional unsaturated polyester as defined in anyone of claims 1-12.

**21.** Fibre mat according to claim 20, wherein the fibre mat is a glass chopped strand fibre mat.

**22.** Use of the fibre mat according to claim 20 or 21 for reinforcing an unsaturated polyester resin or vinyl ester resin.

**23.** Use of the oil in water emulsion according to anyone of claims 1-17 for coating fibres.

**24.** Cured product obtained by curing a composition comprising a resin, a fibre mat according to claim 20 or 21 and a curing initiator.

**25.** Use of the cured product according to claim 24 in the field of chemical anchoring, roofing, relining, gelcoats, containers, tanks, pipes, automotive parts, flooring, windmill blades, aviation, off shore applications, and marine.

**26.** Acid functional unsaturated polyester as defined in anyone of claims 1-12.


**Patentansprüche**

**1.** Öl-in-Wasser-Emulsion, wobei das Öl einen säurefunktionellen ungesättigten Polyester umfasst, wobei der säurefunktionelle ungesättigte Polyester ungesättigte Dicarbonsäure-Einheiten, Diol-Einheiten, Einheiten eines Emulgators mit einem HLB-Wert von 9 bis 20 und ferner Kettenverlängerungsmittel-Einheiten umfasst, wobei der HLB-Wert gemäß der Formel $20*(M_H/M)$ bestimmt wird, wobei M für die Molekülmasse des Emulgators steht und $M_H$ für die Molekülmasse des hydrophilen Teils des Emulgators steht.

**2.** Öl-in-Wasser-Emulsion nach Anspruch 1, wobei der säurefunktionelle ungesättigte Polyester Einheiten eines Emulgators mit einem HLB-Wert von 9 bis 19 umfasst.

**3.** Öl-in-Wasser-Emulsion nach Anspruch 1 oder 2, wobei es sich bei dem eingebauten Emulgator um ein Ethylenoxid/Propylenoxid-Blockcopolymer handelt.

**4.** Öl-in-Wasser-Emulsion nach einem der obigen Ansprüche, wobei es sich bei den Kettenverlängerungsmittel-Einheiten um auf Bisphenol basierende Bisepoxid-Einheiten handelt.

**5.** Öl-in-Wasser-Emulsion nach einem der obigen Ansprüche, wobei der säurefunktionelle ungesättigte Polyester eine $T_g$ von -5 bis 40°C, vorzugsweise von 0 bis 30°C und weiter bevorzugt von 0 bis 15°C aufweist, wobei die $T_g$ mittels DSC gemäß ASTM E1356 bestimmt wird.

**6.** Öl-in-Wasser-Emulsion nach einem der obigen Ansprüche, wobei der säurefunktionelle ungesättigte Polyester eine Viskosität von 20 bis 60 dPa.s aufweist, wobei die Viskosität gemäß ASTM D4287 (gemessen mit Kegel-Platte bei 125°C) bestimmt wird.

**7.** Öl-in-Wasser-Emulsion nach einem der obigen Ansprüche, wobei der säurefunktionelle ungesättigte Polyester eine Säurezahl von 0,1 bis 20 und vorzugsweise von 10 bis 20 aufweist, wobei die Säurezahl des Polyesters gemäß ISO 2114-2000 titrimetrisch bestimmt wird.

8. Öl-in-Wasser-Emulsion nach einem der obigen Ansprüche, wobei es sich bei den ungesättigten Dicarbonsäure-Einheiten um Fumarat-Einheiten handelt.

9. Öl-in-Wasser-Emulsion nach einem der obigen Ansprüche, wobei der säurefunktionelle ungesättigte Polyester ferner Phthalat-Einheiten umfasst.

10. Öl-in-Wasser-Emulsion nach einem der obigen Ansprüche, wobei das Verhältnis der molaren Menge von ungesättigten Dicarbonsäure-Einheiten zur molaren Menge anderer Disäure-Einheiten 0,2 bis 1 beträgt.

11. Öl-in-Wasser-Emulsion nach einem der obigen Ansprüche, wobei es sich bei den Diol-Einheiten des säurefunktionellen ungesättigten Polyesters um aliphatische Diol-Einheiten handelt, die vorzugsweise aus Dipropylenglykol und/oder propoxyliertem Bisphenol-A ausgewählt sind.

12. Öl-in-Wasser-Emulsion nach einem der obigen Ansprüche, wobei der säurefunktionelle ungesättigte Polyester ferner Triol-Einheiten, vorzugsweise Trimethylpropan-Einheiten, umfasst.

13. Öl-in-Wasser-Emulsion nach einem der obigen Ansprüche, wobei die Emulsion mindestens 30 Gew.-% Öl enthält.

14. Öl-in-Wasser-Emulsion nach einem der obigen Ansprüche, wobei die Emulsion 45 bis 50 Gew.-% Öl enthält.

15. Öl-in-Wasser-Emulsion nach einem der obigen Ansprüche, wobei die Menge des ungesättigten Polyesters in dem Öl 70 bis 100 Gew.-% beträgt.

16. Öl-in-Wasser-Emulsion nach einem der obigen Ansprüche, wobei die Teilchengrößenverteilung der Emulsion 100 bis 3000 nm, vorzugsweise 500 bis 2000 nm und weiter bevorzugt 900 bis 1000 nm beträgt, wobei die Teilchengrößenverteilung mit Hilfe der Methode der dynamischen Lichtstreuung gemäß ISO 13320-1 gemessen wird.

17. Öl-in-Wasser-Emulsion nach einem der obigen Ansprüche, wobei die Emulsion durch katastrophale Phaseninversion hergestellt worden ist.

18. Verwendung der Öl-in-Wasser-Emulsion nach einem der obigen Ansprüche zum Verkleben von Fasern zu einer Fasermatte.

19. Verwendung einer Öl-in-Wasser-Emulsion zum Verkleben von Fasern zu einer Fasermatte, wobei das Öl einen säurefunktionellen ungesättigten Polyester nach einem der Ansprüche 1 bis 12 umfasst und die Emulsion 0,1 bis 5 Gew.-% Öl enthält.

20. Fasermatte, umfassend Fasern und ein Bindemittel, das den säurefunktionellen ungesättigten Polyester gemäß einem der Ansprüche 1-12 umfasst.

21. Fasermatte nach Anspruch 20, wobei es sich bei der Fasermatte um eine Glasschnittfasermatte handelt.

22. Verwendung der Fasermatte nach Anspruch 20 oder 21 zur Verstärkung eines ungesättigten Polyesterharzes oder Vinylesterharzes.

23. Verwendung der Öl-in-Wasser-Emulsion nach einem der Ansprüche 1-17 zum Beschichten von Fasern.

24. Gehärtetes Produkt, erhalten durch Härten einer Zusammensetzung, die ein Harz, eine Fasermatte nach Anspruch 20 oder 21 und einen Härtungsinitiator umfasst.

25. Verwendung des gehärteten Produkts nach Anspruch 24 in dem Gebiet der chemischen Verankerung, im Dachbau, beim Unterfütterung, in Gelcoats, Behältern, Tanks, Rohren, Autoteilen, Bodenbelägen und Windkraftwerksflügeln, in der Luftfahrt, bei Offshore-Anwendungen und marinen Anwendungen.

26. Säurefunktioneller ungesättigter Polyester gemäß einem der Ansprüche 1-12.

13

**Revendications**

1. Émulsion huile dans eau, l'huile comprenant un polyester insaturé à fonctionnalité acide, ledit polyester insaturé à fonctionnalité acide comprenant des unités d'acide dicarboxylique insaturé, des unités de diols, des unités d'un émulsifiant ayant une valeur d'équilibre hydrophile/lipophile de 9 à 20 et comprenant en outre des unités d'agent d'extension de chaîne, la valeur d'équilibre hydrophile/lipophile étant déterminée selon la formule $20*(M_H/M)$, dans laquelle M est la masse moléculaire de l'émulsifiant et $M_H$ est la masse moléculaire de la portion hydrophile de l'émulsifiant.

2. Émulsion huile dans eau selon la revendication 1, dans laquelle le polyester insaturé à fonctionnalité acide comprend des unités d'un émulsifiant ayant une valeur d'équilibre hydrophile/lipophile de 9 à 19.

3. Émulsion huile dans eau selon la revendication 1 ou 2, dans laquelle l'émulsifiant incorporé est un copolymère à blocs d'oxyde d'éthylène/oxyde de propylène.

4. Émulsion huile dans eau selon l'une quelconque des revendications précédentes, dans laquelle les unités d'agent d'extension de chaîne sont des unités de bisépoxyde à base de bisphénol.

5. Émulsion huile dans eau selon l'une quelconque des revendications précédentes, dans laquelle le polyester insaturé à fonctionnalité acide a une valeur $T_g$ de -5 °C à 40 °C, préférablement de 0 à 30 °C, plus préférablement de 0 à 15 °C, la $T_g$ étant déterminée par calorimétrie différentielle à balayage selon la méthode ASTM E1356.

6. Émulsion huile dans eau selon l'une quelconque des revendications précédentes, dans laquelle le polyester insaturé à fonctionnalité acide a une viscosité de 20 dPa.s à 60 dPa.s, la viscosité étant déterminée selon la méthode ASTM D4287 (mesurée par viscosimétrie plan-cône à 125 °C).

7. Émulsion huile dans eau selon l'une quelconque des revendications précédentes, dans laquelle le polyester insaturé à fonctionnalité acide a un indice d'acide de 0,1 à 20, préférablement de 10 à 20, l'indice d'acide du polyester étant déterminé par titrimétrie selon la méthode ISO 2114-2000.

8. Émulsion huile dans eau selon l'une quelconque des revendications précédentes, dans laquelle les unités d'acide dicarboxylique insaturé sont des unités fumarates.

9. Émulsion huile dans eau selon l'une quelconque des revendications précédentes, dans laquelle le polyester insaturé à fonctionnalité acide comprend en outre des unités phtalates.

10. Émulsion huile dans eau selon l'une quelconque des revendications précédentes, dans laquelle le rapport de la quantité molaire d'unités d'acide dicarboxylique insaturé contre la quantité molaire d'autres unités de diacides est de 0,2 à 1.

11. Émulsion huile dans eau selon l'une quelconque des revendications précédentes, dans laquelle les unités de diols du polyester insaturé à fonctionnalité acide sont des unités de diols aliphatiques, préférablement sélectionnées parmi le dipropylène glycol et/ou le bisphénol A propoxylé.

12. Émulsion huile dans eau selon l'une quelconque des revendications précédentes, dans laquelle le polyester insaturé à fonctionnalité acide comprend en outre des unités de triols, préférablement des unités de triméthylolpropane.

13. Émulsion huile dans eau selon l'une quelconque des revendications précédentes, l'émulsion contenant au moins 30 % en poids d'huile.

14. Émulsion huile dans eau selon l'une quelconque des revendications précédentes, l'émulsion contenant de 45 % à 50 % en poids d'huile.

15. Émulsion huile dans eau selon l'une quelconque des revendications précédentes, dans laquelle la quantité du polyester insaturé dans l'huile est de 70 % à 100 % en poids.

16. Émulsion huile dans eau selon l'une quelconque des revendications précédentes, dans laquelle la distribution granulométrique de l'émulsion est de 100 nm à 3 000 nm, préférablement de 500 nm à 2 000 nm, plus préférablement de 900 nm à 1 000 nm, la distribution granulométrique étant mesurée en utilisant une méthode dynamique de diffusion de la lumière selon ISO 13320-1.

**17.** Émulsion huile dans eau selon l'une quelconque des revendications précédentes, l'émulsion ayant été préparée par inversion de phase catastrophique.

**18.** Utilisation de l'émulsion huile dans eau selon l'une quelconque des revendications précédentes pour le collage de fibres afin d'obtenir un mat de fibres.

**19.** Utilisation d'une l'émulsion huile dans eau pour le collage de fibres afin d'obtenir un mat de fibres, l'huile comprenant un polyester insaturé à fonctionnalité acide selon l'une quelconque des revendications 1 à 12 et l'émulsion contenant de 0,1 % à 5 % en poids d'huile.

**20.** Mat de fibres comprenant des fibres et un liant comprenant le polyester insaturé à fonctionnalité acide tel que défini dans l'une quelconque des revendications 1 à 12.

**21.** Mat de fibres selon la revendication 20, le mat de fibres étant un mat à fibres de verre coupées.

**22.** Utilisation du mat de fibres selon la revendication 20 ou 21 pour le renforcement d'une résine de polyester ou d'une résine de vinylester insaturée.

**23.** Utilisation de l'émulsion huile dans eau selon l'une quelconque des revendications 1 à 17 pour le revêtement de fibres.

**24.** Produit durci obtenu par durcissement d'une composition comprenant une résine, un mat de fibres selon la revendication 20 ou 21 et un initiateur de durcissement.

**25.** Utilisation du produit durci selon la revendication 24 dans le domaine de l'ancrage chimique, des revêtements de toitures, du regarnissage, des enduits gélifiés, des contenants, des réservoirs, des tuyaux, des pièces automobiles, des revêtements de sol, des aubes d'éoliennes, de l'aéronautique, des applications offshore, et des applications marines.

**26.** Polyester insaturé à fonctionnalité acide tel que défini dans l'une quelconque des revendications 1 à 12.